# EUROPEAN PATENT APPLICATION

(11) **EP 2 599 732 A1**
(43) Date of publication of application: **05.06.2013**
(21) Application number: 11009567.6
(22) Date of filing: 03.12.2011
(51) Int. Cl.: B65D 51/24, G01F 1/00, G04F 1/00, B67D 3/00

(54) **Beverage cap for being fastened on a bottle**

(71) Applicant: Fortuna, Diego Valentino, 36050 Sovizzo (VI) (IT)
(72) Inventor: Fortuna, Diego Valentino, 36050 Sovizzo (VI) (IT)
(74) Representative: FDST Patentanwälte

(57) **Abstract**

The invention relates to a beverage cap (2) for being fastened on a bottle (10). The beverage cap (2) comprises a volume counter (26) for measuring the actual liquid volume (Vᵢₛₜ) flown out of the bottle (10), a time counter (16) for adjusting a nominal liquid volume (Vₛₒₗₗ) during a time interval (Δt), and a signaling device (12, 36) for outputting a signal as a function of the actual liquid volume (Vᵢₛₜ) in relation to the nominal liquid volume (Vₛₒₗₗ).

## Description

The invention relates to a beverage cap for being fastened on a bottle.

The human body contains a large quantity of water. According to the standard values of the World Health Organization (WHO), the share of water of a person of normal weight amounts to approximately 50% to 55% for women and 60% to 65% for men. A healthy body egests daily approximately 2.5 liters of water in the form of urine, sweat, breath, and stool. Under physical load, through illness or sport activities, the water quantity egested will increase.

The water quantity egested should be ingested again as soon as possible because the cells in the body are dependent on a sufficient quantity of water. If the body dehydrates, the activity of the cells will considerably be reduced, so that the body is, for example, no longer able to correctly dispose of waste substances. A lasting lack of liquid intake cannot at a later time sufficiently be compensated by the body, with the consequence that damages to health may occur.

Part of the water quantity egested is fed to the body again through food, for example fruits or vegetables. For a suitable supply of liquids, it is, however, necessary to sufficiently drink every day. The recommended standard value of liquid intake for an adult individual is approximately 1.5 liters of water per day, under physical load, it is correspondingly more. In modern everyday life, often the problem arises that many persons do not manage to drink sufficient quantities of liquids. This is sometimes due to the fact that, for example, caffeine-containing or alcoholic beverages additionally extract water from the body, which correspondingly increases the necessary liquid intake.

From the point of view of evolution, the human body is adapted to withstand, to a certain extent, periods of insufficient ingestion of food and liquid. One consequence thereof is the fact that the human body can withstand shorter period of that kind without an immediate sensation of thirst. This leads among others to the fact that due to the manifold activities during the day, one forgets to drink liquids sufficiently and regularly. It is in particular desirable to regularly drink small liquid quantities, enabling the body to take in the liquid better and more efficiently than by drinking a large liquid quantity at a time.

From DE 10 2006 039 101 B3, a closure for a bottle is known which induces a person to drink regularly. The known closure comprises a functional area including an alarm. When a user drinks a liquid quantity from the bottle, he/she can reclose it, the alarm being adjustable such that it will remind the user after some time of drinking anew.

With the beverage cap of the above-mentioned type, the alarm just induces the user to drink regularly. It is, however, not guaranteed in this way that the user drinks a sufficiently large quantity of liquid.

The invention is, therefore, based on the problem to provide a beverage cap which induces the user in a reliable and simple manner to ingest liquid regularly and sufficiently.

This problem is solved according to the invention by the features of claim 1. Advantageous embodiments and developments are the subject matter of the dependent claims.

For this purpose, the beverage cap comprises a volume counter for measuring the actual liquid volume flown out of the bottle and a time counter for adjusting a nominal liquid volume during a time interval as well as a signaling device for outputting a signal as a function of the actual liquid volume in relation to the nominal liquid volume.

Contrary to the state of the art, the actual liquid volume is also captured, in addition to the time interval, and is evaluated with a stored value for a nominal liquid volume. In this way, it is possible to induce the user to drink both regularly and a sufficient quantity of liquid. By the term "liquid", one understands in the following in particular drinking water or mineral water and by the term "bottle", in particular a beverage bottle.

In an expedient embodiment, the beverage cap is provided with a closing area, which is complementarily adapted to a bottle opening of a beverage bottle, so that in closed condition of the beverage bottle, the closing area is coupled with the bottle opening with positive and/or non-positive locking. The closing area can be executed, for example, as an internal thread to be screwed onto a corresponding external thread at the bottleneck. An embodiment of the type of a clamping or snap-on closure for closing beverage bottles without external thread is, for example, also imaginable. In each case, the beverage cap according to the invention forms a reclosable unit with the beverage bottle.

In a preferred embodiment, the actual liquid volume or a measured quantity proportional thereto is captured, for example, by means of a volume counter of the type of a flow-rate sensor unit, and a corresponding measuring signal for an evaluation unit is generated. In an expedient embodiment of the invention, the evaluation unit consists at least substantially of a microcontroller, in which a control program automatically capturing and evaluating the actual and nominal liquid volumes is implemented. Alternatively, the evaluation unit can also consist, for example, of an application-specific integrated circuit (ASIC).

In a likewise expedient embodiment, the time counter is executed as an internal clock of the microcontroller with a date and hour function. With the clock, the time interval for the nominal liquid volume can be regulated or adjusted.

In another advantageous embodiment, the original liquid quantity inside the beverage bottle is stored or can be stored in the control program of the evaluation unit. This makes it possible, for example, to output another signal to the signaling device, as soon as the liquid quantity inside the bottle is running low. The evaluation of the actual liquid volume makes it advantageously possible to remind the user in time of refilling or exchanging the beverage bottle, thus guaranteeing a constantly regular and sufficient intake of liquid. In this way, the beverage cap can easily also be used with smaller beverage bottles during the time interval, which advantageously increases its flexibility.

The beverage cap can be mounted by a user onto the beverage bottle from which he/she wants to regularly drink liquid. When a liquid quantity is drunk from the beverage bottle, the flow-rate sensor unit will capture the flown-out actual liquid volume. The control program of the evaluation unit compares the captured value of the actual liquid volume with a stored threshold value of the nominal liquid volume as a function of the time interval. When the actual liquid volume reaches the threshold value of the nominal liquid volume, the evaluation unit will send the signal to the signaling device. The signaling device signalizes to the user that he/she has drunk a sufficient quantity of liquid during the time interval. In a usual development, an alert signal will be sent to the signaling device when the actual liquid volume does not reach, or exceeds, the threshold value of the nominal liquid volume during the time interval. This reminds the user in an advantageous and simple manner of regular drinking.

In a suitable development, the nominal liquid volume is constantly or stepwise increased by means of the time counter during the time interval, which lies in particular between 10 and 24 hours. In other words, the time interval is divided into several equitemporal or else non-equitemporal time stretches, in each of which an additional value is added to the nominal liquid volume. This stepwise increase of the nominal liquid volume guarantees that the user regularly drinks a sufficient quantity of liquid. In the following, by the term "equitemporal stretches", one particularly understands stretches that comprise the same span of time.

For this purpose, for example, the control program of the evaluation unit is adapted for dividing the time interval into a number of equitemporal time stretches. In each of these time stretches, the threshold value for the nominal liquid volume is successively increased and the value of the actual liquid volume is continuously compared with it. Suitably, the nominal liquid volume is increased by the same amount in each of the successive time stretches. In this way the nominal liquid volume is sequentially increased to the value of the liquid volume inside the beverage bottle.

Instead of using a time interval lying between 10 and 24 hours, the time interval is set or is settable to a value that lies between 1 and 8 hours. This time interval is especially suitable for users that are doing sports, as for example users that participate in a bicycle race. Particularly the adjustment of the nominal liquid volume is altered accordingly to the time interval.

In an expedient embodiment, the nominal liquid volume is chosen such that it is larger than 0 liters and smaller than 7 liters, in particular smaller than 3 liters. Too much liquid is as unfavorable to the human body as too little liquid. An excessive intake of water may lead, for example, to hyperhydration ("water intoxication"). The limitation of the nominal liquid volume advantageously reduces the risk that the user drinks an excessive amount of liquid.

In an advantageous embodiment, the nominal liquid volume is stored in a storage or calculated by a microprocessor, at least partially, as a function of age, sex, height, weight, state of health, and/or a current activity of a user. The daily requirement of liquid depends on a number of factors, and by taking into account as many of these factors as possible, it is possible to determine a suitable value for the nominal liquid volume. In addition, this increases the flexibility of the beverage cap.

A preferred development provides a sensor unit for detecting the environmental temperature, the altitude, the humidity of the air of the environment, and/or the heartbeat of the user, as a function of the sensor data of which, at least partially, the nominal liquid volume is stored in a storage and/or calculated by a microprocessor. This dynamic adaption of the nominal liquid volume to the environment and/or the situation of the user guarantees that the beverage cap always calculates a particularly suitable value for the nominal liquid volume.

Sweating of the body and a loss of liquid depend on the environmental temperature and the humidity of the air. Through the provision of a temperature sensor and/or a humidity sensor, the evaluation unit of the beverage cap is suited and adapted for updating the threshold value for the nominal liquid volume by means of the data measured by said sensors.

Physical exercise, such as, for example, sports, also increases the loss of liquid of the body. Connection to a pulse-frequency measuring device, in particular in the form of a chest strap, makes it possible to measure the user's pulse and to update the nominal liquid volume by means of the measured data. The chest strap can be coupled for that purpose, through a wire, in an electrically conductive manner, with the beverage cap, or else, in a preferred embodiment, by signaling technique and wireless, by means of wifi and/or Blue Tooth.

In an advantageous embodiment, the beverage cap includes a conduit pipe through which the liquid volume is passed. For example, the flow-rate sensor unit for capturing the actual liquid volume is arranged in the area of the conduit pipe. The conduit pipe serves in mounted condition of the beverage cap as a spout for the beverage bottle.

In an expedient development, the invention comprises a valve closing the conduit pipe and a control unit for operating the valve as a function of the actual liquid volume and of the nominal liquid volume. The control unit is controlled by the evaluation unit. The evaluation unit sends, for example, a control signal causing the opening of the valve to the control unit, as long as the captured value for the actual liquid volume is lower than the stored threshold value of the nominal liquid volume. When the captured value for the actual liquid volume reaches or exceeds the stored threshold value of the nominal liquid volume, the evaluation unit will send, for example, a control signal causing the closing of the valve to the control unit. In this way, it is possible in a simple and reliable manner to dispense only the calculated nominal liquid volume, which advantageously further reduces the risk of an excessive intake of liquid through the user.

In a suitable development, a bridging-over unit for manually operating the valve is provided. As far as the user, after drinking the nominal liquid volume, is still thirsty, the bridging-over unit will enable him/her to drink more liquid from the beverage bottle. Suitably, the additionally withdrawn liquid volume is also captured as actual liquid volume, and the nominal liquid volume is then newly calculated as a function of the additionally withdrawn liquid volume.

In a likewise expedient development, the conduit pipe includes a flexible mouth piece. The mouth piece is designed, for example, as a nipple-like suction device to be slipped on to the conduit pipe. This facilitates feeding liquid food for babies. In this form of application, the beverage bottle is in particular a baby bottle.

In an advantageous embodiment, the beverage cap includes a filter for cleaning the liquid. The filter is, for example, exchangeable and enables filtering out impurities while the liquid is flowing out of the beverage bottle through the beverage cap. This improves the quality of the liquid. This improvement comprises in particular the removal or reduction of particles such as turbid substances or microorganisms or undesired substances dissolved in the liquid.

In a suitable embodiment, the signaling device is designed as a loudspeaker, a lamp, a vibration device and/or a display. With the signaling device, the beverage cap is suited and adapted for inducing the user in an audible, visual and/or tactile manner to drink. For example by the signaling device information on the actual liquid volume can be represented. Particularly the actual liquid volume is shown by the display or the signaling device comprises a set of lamps or light-emitting diodes (LEDs), a fraction of them lighted corresponding to the actual liquid volume and the relation of the actual liquid volume to the nominal liquid volume respectively. It is also imaginable to show on the display the hour or a countdown counting down the time of the time interval and the nominal liquid volume as well.

In a suitable embodiment of the invention, the beverage cap comprises an input device for configuring the time counter. For example the time interval can be set to a value lying between 1 and 8 hours. Particularly the input device can be used to change the time interval from a value lying between 10 and 24 hours to a value lying between 1 and 8 hours. By this the beverage cap can be used by the user during a normal workday as well as during sporting events, whereby a suitable consumption of the liquid by the user is nevertheless ensured in each case.

The input device is advantageously designed as one or more operating knobs for manual operation on the beverage cap. Additionally or alternatively, the beverage cap includes a signal antenna by means of which the beverage cap can be configured via an external device. The external device is, for example, a computer or a smartphone, the signal antenna being designed for sending and receiving wifi and/or Blue Tooth signals.

In an advantageous embodiment, the invention comprises an adaptor for fixing it on a water tap. With the filter and the adaptor, the beverage cap can thus be used in the household as a water filter. In regions with high water hardness, it is, for example, possible, by using the beverage cap on a water tap, to reduce the water hardness in such a way that less calcium deposits develop in devices for hot-water processing and other vessels.

In the preferred application, the beverage bottle is in particular a bicycle bottle which is coupled with the beverage cap and can be closed by means of the latter. Preferably, the beverage bottle has a volume between 0.5 liters and 7 liters, in particular, between 0.75 liters and 2 liters. Generally, however, a corresponding beverage cap can also be used for closing another liquid container.

In the following, some exemplary embodiments of the invention are explained in details by means of a drawing, in which, in simplified and schematic representations,
- Fig. 1: shows a first embodiment of the beverage cap according to the invention,
- Fig. 2: is a sectional view of the beverage cap along the line II-II in Fig. 1,
- Fig. 3: shows a second embodiment of the beverage cap,

- Fig. 4: shows a third embodiment of the beverage cap,
- Fig. 5: shows a fourth embodiment of the beverage cap,
- Fig. 6: shows the beverage cap of Fig. 4, mounted on a beverage bottle, and
- Fig. 7: shows the beverage cap of Fig. 5 with an adaptor hose in a condition mounted with a water tap.

Parts and sizes corresponding to each other are marked with the same reference numbers in all figures.

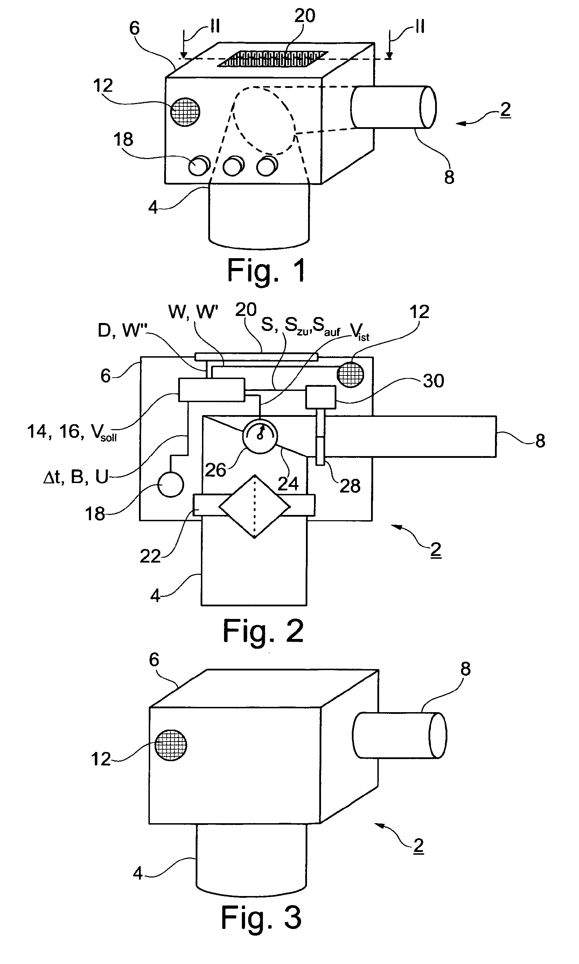

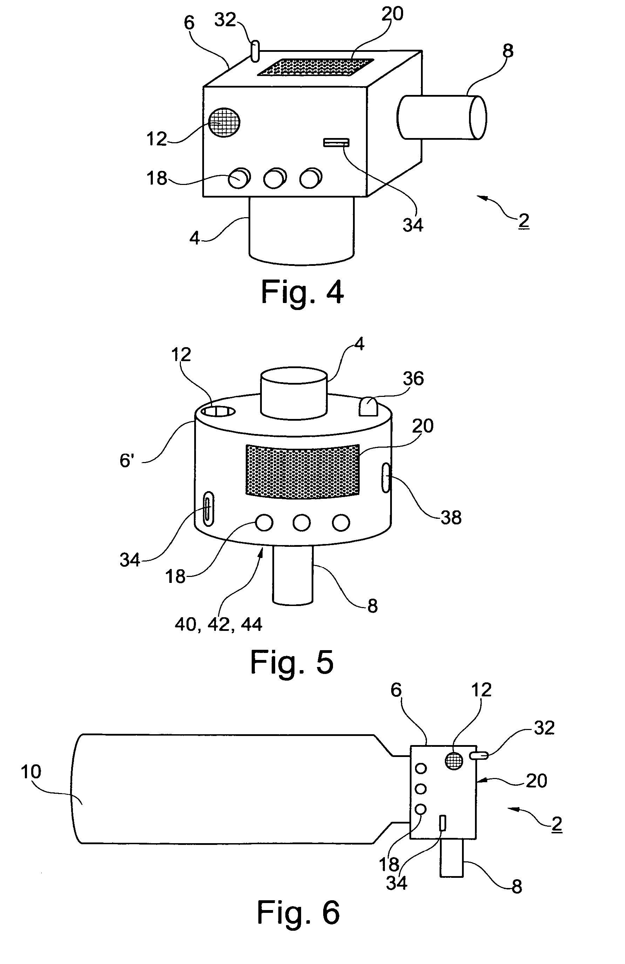

Figures 1 to 2 show a beverage cap 2 according to the invention, comprising a closing area 4 for closing a beverage bottle, a housing 6 and a spout 8 for pouring out or drinking a liquid. The closing area 4 includes an internal thread which can be screwed - as is to be seen in Fig. 6 - onto an external thread, not shown in detail, on a bottleneck of a beverage bottle 10. The closing area 4 and the spout 8 are substantially hollow-cylinder-like metallic line pipes with a round cross-section, which are coupled with each other inside the housing 6 from the point of view of flow technology. The housing 6 is in this embodiment substantially of rectangular shape and made of a metallic or plastic-type material. The housing 6 includes on its surface a loudspeaker 12 for emitting an audio signal for a user.

The closing area 4 is arranged approximately centrically on the lower side, i.e. on that side of the housing 6 which in mounted conditions faces towards the beverage bottle 10. The spout 8 is arranged approximately centrically on one of the side faces of the housing 6, approximately at right angles to the closing area 4. In this embodiment, the closing area 4 and the spout 8 form an approximately L-shaped line system through which a liquid will flow when the beverage cap 2 is used.

The loudspeaker 12 is arranged in an upper corner area of the front side of the housing 6. In addition to the loudspeaker 12, the housing 6 includes on its surface three push-button-like operating knobs 18 as input devices, as well as a digital display 20 for displaying information. In the drawing, by way of example, only one of the operating knobs 18 is marked with a reference number. The display 20 is substantially a strip-like LCD screen or an LED display, arranged approximately centrically on the upper side of the housing 6. The three operating knobs 18 are arranged, equally spaced, at the lower end of the front side of the housing 6.

The housing 6 comprises - as is evident from Fig. 2 - a microcontroller 14 as evaluation unit, which is arranged inside the housing 6. The microcontroller 14 includes an internal clock 16 as a time counter. The closing area 4 includes inside the housing 6 an exchangeable activated-carbon filter 22 for improving the quality of the liquid during use of the beverage cap 2.

The closing area 4 and the spout 8 are undetachably coupled with each other inside the housing 6, substantially at right angles, through a weld seam 24. It is, however, also imaginable that the closing area 4 and the spout 8 are partial areas of a single line pipe, which is bent, for example, in the corresponding L-shape.

In the area of the weld seam 24, a flow-rate sensor 26 is arranged as a volume counter, which captures the actual liquid volume flowing out through the spout 8 and generates a corresponding measuring signal Vᵢₛₜ for the microcontroller 14 as a measure of the flown-out liquid volume.

By means of the operating knobs 18, a user can manually configure a time interval Δt for adjusting a nominal liquid volume Vₛₒₗₗ by generating an operating signal B for the microcontroller 14. Alternatively or additionally, further information on the user, such as, for example, age, sex, height, weight, state of health and/or current activity, can be programmed into the microcontroller 14 by means of the operating knobs 18 and the operating signal B. The microcontroller 14 is adapted for determining a value for the nominal liquid volume Vₛₒₗₗ at least partially as a function of this additional information.

In the area of the weld seam 24, a valve 28 is arranged inside the spout 8, which can be opened or closed as a function of a control signal S from a control unit 30 coupled from the point of view of signal technology with the valve 28. In closed state of the valve 28, substantially no liquid can flow out of the spout 8.

For the intended use, the user screws the beverage cap 2 onto a beverage bottle 10 from which he/she wishes to regularly drink liquid. By manual operation of the operating knobs 18, the time interval Δt as well as additional information are input into the microcontroller 14. The time interval Δt can, however, also be fixedly stored in the microcontroller 14 or can directly be calculated as a function of an input made by means of the operating knobs 18. Based on these data, the microcontroller 14 calculates a threshold value for the nominal liquid volume Vₛₒₗₗ. The microcontroller 14 divides the time interval Δt into a number of time stretches, the threshold value for the nominal liquid volume Vₛₒₗₗ being successively increased stepwise in each time stretch.

In an alternative or additional embodiment, the microcontroller is adapted for storing the developments in time of the actual liquid volume Vᵢₛₜ as well as of the nominal liquid volume Vₛₒₗₗ in a storage. The microcontroller 14 evaluates the developments in time and is adapted for calculating the nominal liquid volume Vₛₒₗₗ in subsequent applications of the beverage cap 2 at least partially as a function of the evaluated developments. It is imaginable, for example, to adapt the number and duration of the stretches of time or to increase the nominal liquid volume Vₛₒₗₗ step-wise. This enables an at least partial adaption to the user and his/her drinking behavior.

During use, the microcontroller 14 compares in a time stretch of the time interval Δt the value of the actual liquid volume Vᵢₛₜ, captured by the flow-rate sensor 26, substantially continuously, with the stored threshold value of the nominal liquid volume Vₛₒₗₗ. As long as the value of the actual liquid volume Vᵢₛₜ is lower than the value of the nominal liquid volume Vₛₒₗₗ, the valve 28 will be open, so that liquid can flow out through the spout 8. If the actual liquid volume Vᵢₛₜ reaches or exceeds the threshold value of the nominal liquid volume Vₛₒₗₗ within the time stretch, a control signal S_{zu} closing the valve 28 will be sent from the microcontroller 14 to the control unit 30. If the threshold value is not reached within the time stretch, the microcontroller 14 will send an alert signal W to the loudspeaker 12 for emitting an audio signal to induce the user to drink.

If time counting of the clock 16 reaches the end of a time stretch of the time interval Δt, the microcontroller 14 will increase the threshold value of the nominal liquid volume Vₛₒₗₗ at the beginning of the next time stretch and will send to the control unit 30 a signal S_{auf} opening the valve 28. The microcontroller 14 also sends an alert signal W' to the loudspeaker 12 for emission of another audio signal informing the user that the valve 28 is open again. Preferably, the audio signal of the loudspeaker 12 caused by the alert signal W and the one caused by the alert signal W' can easily be distinguished acoustically by the user.

During operation of one of the operating knobs 18, it is, furthermore, provided that a bridging-over signal U is sent to the microcontroller 14. Upon receipt of the bridging-over signal U, the microcontroller sends the control signal S_{auf} to the control unit 30 for opening the valve 28. This enables the user to open the valve 28 manually, so that he/she can drink more liquid, if desired.

The indications on the display 20 can be controlled via a display signal D of the microcontroller 14. By means of the operating signal B, it is, for example, possible to permute between several different indications on the display 20. It is, for example, imaginable to display the time interval Δt, the actual liquid volume Vᵢₛₜ and/or the nominal liquid volume Vₛₒₗₗ. Additionally or alternatively, it is, however, likewise imaginable that the display 20 indicates a visual alert signal W", for example a flashlight, similar to the audio signals of the loudspeaker 12.

Fig. 3 shows a first alternative embodiment of the beverage cap 2. Contrary to the above-described embodiment, the housing 6 only comprises the loudspeaker 12. The operating knobs 18 and the display 20 have been omitted. The information of the user is exclusively effected via the loudspeaker 12 by means of the acoustic alert signals W, W'. Furthermore, this beverage cap 2 has no valve 28. Rather can the water be dispensed at any time, the actual liquid volume Vᵢₛₜ withdrawn still being captured, however, by means of the flow-rate sensor 26. The time interval Δt is firmly stored in the microcontroller 14, because the latter cannot be influenced. Fig. 4 is a representation of a second alternative embodiment of the beverage cap 2. In this embodiment, contrary to the embodiment shown in Fig. 1 and Fig. 2, the beverage cap 2 additionally includes an antenna 32 for sending and receiving wireless signals, as well as a connector 34 for external devices. The antenna 32 is in particular adapted for sending and receiving wifi and Blue-Tooth signals. The antenna 32 and the connector 34 are coupled with the microcontroller 14 from the point of view of signal technology.

The microcontroller 14 generates the signals to be sent of the antenna 32 and evaluates the signals received. In this way, it is possible, for example, to program the operating signal B for configuring the time interval Δt and the nominal liquid volume Vₛₒₗₗ into the beverage cap 2 by means of a computer or a smartphone or, for example, to call data about the consumption of liquid to a computer or a smartphone. It is likewise imaginable to receive wireless signals of a chest strap for capturing the user's pulse frequency. The microcontroller can use such measured data, at least partially, for determining the optimum nominal liquid volume Vₛₒₗₗ. Furthermore, for example, new functions, new software or software updates, for example from the Internet, can be downloaded and installed on the beverage cap 2 via the signals received.

The connector 34 serves for coupling, from the point of view of signal technology, the beverage cap 2, in particular the microcontroller 14, with an external device. The external device is in this embodiment in particular a USB storage medium, not shown in detail, and the connector 34 is a female USB plug. In this way, it is possible, for example, to transfer the developments in time of the actual liquid volume Vᵢₛₜ as well as of the nominal liquid volume Vₛₒₗₗ or other data from the storage of the microcontroller 14 to the USB storage medium and thus to evaluate on a computer, for example, the daily, weekly and/or monthly development.

In the following, a fourth embodiment variant of the beverage cap 2 with a cylindrical housing 6' will be explained by means of Fig. 4. In this embodiment, shown in Fig. 5, the closing area 4 is arranged approximately centrically in the lower surface of the housing 6', the spout 8 being arranged on the opposite surface, also substantially centrically. The lower surface also comprises the loudspeaker 12 and a light-emitting diode (LED) 36 for sending a visual signal to the user. On the lateral area of the housing 6', in the upper part, three operating knobs 18 are arranged, in the lower part, the display 20 is arranged, and at the side of the display 20, the connector 34 and a battery compartment 38 are arranged. In the battery compartment 38, for example, button batteries for the current supply of the beverage cap 2 can be placed.

The LED 36 is coupled, from the point of view of signal technology, with the microcontroller 14 and generates a visual signal to induce the user to drink. For example, the LED 36 lights when the valve 28 is open. It is also imaginable that the LED 36 lights in different colors, depending on the opening state of the valve 28, for example in red for closed and green, for open.

On the upper surface, a temperature sensor 40, not shown in detail, an altitude sensor 42, not shown in detail, as well as a humidity sensor 44, not shown in detail, are arranged. The temperature sensor 40, the altitude sensor 42 as well as the humidity sensor 44 are coupled, from the point of view of signal technology, with the microcontroller 14. The microcontroller 14 is adapted for continuously evaluating the captured measuring signals of the temperature sensor 40, of the altitude sensor 42 and of the humidity sensor 44 and thus to adapt the threshold value for the nominal liquid volume Vₛₒₗₗ dynamically to the ambient temperature, the difference in altitude, and the humidity of the air.

Fig. 6 shows the beverage cap 2 according to the third embodiment variant, mounted on the beverage bottle 10. The beverage bottle 10 is in particular a bicycle bottle made of plastic with a filling volume of about 0.75 liters. In this arrangement the time interval Δt is set to a value of 2 hours.

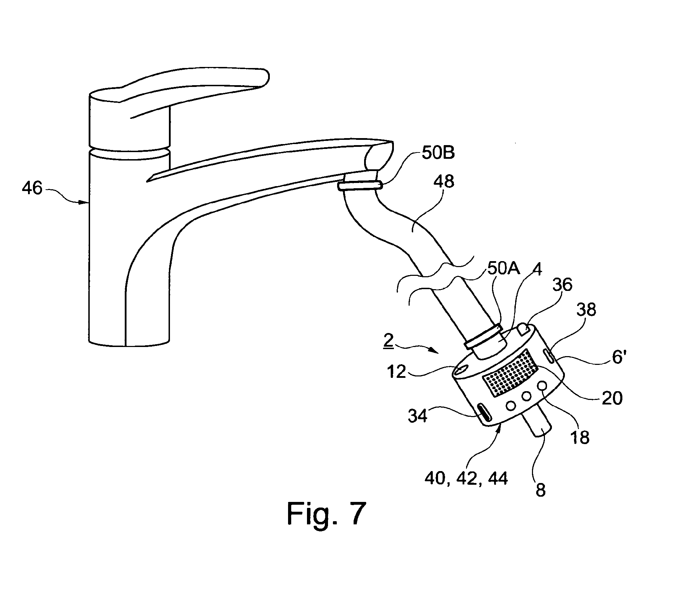

In the following, the application of the beverage cap 2 according to the fourth embodiment variant, when connected to a water tap 46 by means of an adaptor hose 48, will be explained by means of Fig. 7. The adaptor hose 48 is made of an elastic rubber material and includes at each of its end a connection area 50A and 50B. The beverage-cap-side connection area 50A has a beverage-bottle-like external thread, onto which the beverage cap 2 can easily be screwed in a watertight manner. The water-tap-side connection area 50B is suited and adapted for being fastened on the water tap 46 with positive and/or non-positive locking. In this way, the water tap 46 is coupled, from the point of view of flow technology, with the spout 8, so that, for example, the water from the water tap 46 can be filtered by the activated-carbon filter 22. The user is induced by means of the loudspeaker 12 or the LED 36 to drink, and/or the valve 28 is operated as a function of the actual liquid volume Vᵢₛₜ in relation to the nominal liquid volume Vₛₒₗₗ.

In a suitable dimensioning, the housing 6 or the housing 6' is approximately 3.5 cm long, 3.5 cm wide and 1.5 cm high. The closing area 4 has a diameter of approximately 2.5 cm and a height of 1 cm, so that it can easily be screwed onto conventional bottle threads. The spout 8 has a diameter of about 1.0 cm and a height of 1.5 cm. In an expedient embodiment, the adaptor hose 48 is approximately 20 cm to 30 cm long.

The invention is not limited to the above-described exemplary embodiments. Rather a person skilled in the art can derive other variants of the invention therefrom, without deviating from the subject matter of the invention. In particular, furthermore, all individual features described in connection with the various exemplary embodiments can also be combined with each other in another manner, without deviating from the subject matter of the invention.

### List of reference numbers

| | | | |
|---|---|---|---|
| 2 | Beverage cap | Vᵢₛₜ | Actual liquid volume |
| 4 | Closing area | Vₛₒₗₗ | Nominal liquid volume |
| 6, 6` | Housing | Δt | Time interval |
| 8 | Spout | B | Operating signal |
| 10 | Beverage bottle | S, S_{zu}, S_{auf} | Control signal |
| 12 | Loudspeaker | W, W', W"' | Alert signal |
| 14 | Microcontroller | U | Bridging-over signal |
| 16 | Clock | D | Display signal |
| 18 | Operating knob | | |
| 20 | Display | | |
| 22 | Activated-carbon filter | | |
| 24 | Weld seam | | |
| 26 | Flow-rate sensor | | |
| 28 | Valve | | |
| 30 | Control unit | | |
| 32 | Antenna | | |
| 34 | Connector | | |
| 36 | LED | | |
| 38 | Battery compartment | | |
| 40 | Temperature sensor | | |
| 42 | Altitude sensor | | |
| 44 | Humidity sensor | | |
| 46 | Water tap | | |
| 48 | Adaptor hose | | |
| 50A, 50B | Connection area | | |

## Claims

1. A beverage cap (2) for being fastened on a bottle (10),
- having a volume counter (26) for measuring the actual liquid volume (Vᵢₛₜ) flown out of the bottle (10),
- having a time counter (16) for adjusting a nominal liquid volume (Vₛₒₗₗ) by means of a time interval (Δt),
- having a signal device (12, 20, 36) for outputting a signal as a function of the actual liquid volume (Vᵢₛₜ) in relation to the nominal liquid volume (Vₛₒₗₗ).

2. The beverage cap (2) of claim 1,
**characterized in that**
the nominal liquid volume (Vₛₒₗₗ) is constantly or stepwise increased by means of the time counter (16) via the time interval (Δt), lying in particular between 10 and 24 hours, or which can be set to a value lying between 1 and 8 hours.

3. The beverage cap (2) of claim 1 or 2,
**characterized in that**
the nominal liquid volume (Vₛₒₗₗ) is larger than 0 liters and smaller than 7 liters, in particular smaller than 3 liters.

4. The beverage cap (2) of any of claims 1 to 3,
**characterized in that**
the nominal liquid volume (Vₛₒₗₗ) is stored in a storage (14) and/or calculated by a microprocessor (14), at least partially, as a function of age, sex, height, weight, state of health, and/or a current activity of a user.

5. The beverage cap (2) of any of claims 1 to 4,
**characterized by**
a sensor unit (42, 44, 46) for detecting the environmental temperature, the altitude, the humidity of the air of the environment, and/or the heartbeat of a user, as a function of the sensor data of which, at least partially, the nominal liquid volume (Vₛₒₗₗ) is stored in a storage (14) and/or calculated by a microprocessor (14).

6. The beverage cap (2) of any of claims 1 to 5,
**characterized by**
a conduit pipe (4, 8) through which the liquid volume is passed.

7. The beverage cap (2) of claim 6,
**characterized by**
a valve (28) closing the conduit pipe (4, 8) and a control unit (30) for operating the valve (28) as a function of the actual liquid volume (Vᵢₛₜ) and of the nominal liquid volume (Vₛₒₗₗ).

8. The beverage cap (2) of claim 7,
**characterized by**
a bridging-over unit (18) for manually operating the valve (28).

9. The beverage cap (2) of any of claims 6 to 8,
**characterized in that**
the conduit pipe (4, 8) includes a flexible mouth piece.

10. The beverage cap (2) of any of claims 1 to 9,
**characterized by**
a filter (22) for cleaning the liquid.

11. The beverage cap (2) of any of claims 1 to 10,
**characterized in that**
the signal device (12, 20, 36), in particular a loudspeaker (12), a lamp (36), a vibration device and/or a display (20), is arranged to indicate the actual liquid volume (Vᵢₛₜ).

12. The beverage cap (2) of any of claims 1 to 11,
**characterized by**
an input device (18) for configuring the time counter (16), in particular for setting time interval (Δt) to a value lying between 1 and 8 hours.

13. The beverage cap (2) of any of claims 1 to 12,
**characterized by**
an adaptor (48) for fixing it on a water tap (46).

14. A beverage bottle (10), in particular a bicycle bottle, having a beverage cap (2) according to any of claims 1 to 13.

15. The beverage bottle (10) of claim 14,
**characterized by**
a volume between 0.5 liters and 7 liters and in particular a volume between 0.75 liters and 2 liters.

## Amended claims

### Amended claims in accordance with Rule 137(2) EPC.

**1.** A beverage cap (2) for being fastened on a bottle (10),
- having a volume counter (26) for measuring the actual liquid volume (Vᵢₛₜ) flown out of the bottle (10),
- having a time counter (16) for adjusting a nominal liquid volume (Vₛₒₗₗ) by means of a time interval (Δt),
- having a signal device (12, 20, 36) for outputting a signal as a function of the actual liquid volume (Vᵢₛₜ) in relation to the nominal liquid volume (Vₛₒₗₗ)
and whereby
- the nominal liquid volume (Vₛₒₗₗ) is calculated by a microprocessor (14), at least partially, as a function of age, sex, height, weight, state of health, and/or a current activity of a user.

**2.** The beverage cap (2) of claim 1,
**characterized in that**
the nominal liquid volume (Vₛₒₗₗ) is constantly or stepwise increased by means of the time counter (16) via the time interval (Δt), lying in particular between 10 and 24 hours, or which can be set to a value lying between 1 and 8 hours.

**3.** The beverage cap (2) of claim 1 or 2,
**characterized in that**
the nominal liquid volume (Vₛₒₗₗ) is larger than 0 liters and smaller than 7 liters, in particular smaller than 3 liters.

**4.** The beverage cap (2) of any of claims 1 to 3,
**characterized by**
a sensor unit (42, 44, 46) for detecting the environmental temperature, the altitude, the humidity of the air of the environment, and/or the heartbeat of a user, as a function of the sensor data of which, at least partially, the nominal liquid volume (Vₛₒₗₗ) is stored in a storage (14) and/or calculated by a microprocessor (14).

**5.** The beverage cap (2) of any of claims 1 to 4,
**characterized by**
a conduit pipe (4, 8) through which the liquid volume is passed.

**6.** The beverage cap (2) of claim 5,
**characterized by**
a valve (28) closing the conduit pipe (4, 8) and a control unit (30) for operating the valve (28) as a function of the actual liquid volume (Vᵢₛₜ) and of the nominal liquid volume (Vₛₒₗₗ).

**7.** The beverage cap (2) of claim 6,
**characterized by**
a bridging-over unit (18) for manually operating the valve (28).

**8.** The beverage cap (2) of any of claims 5 to 7,
**characterized in that**
the conduit pipe (4, 8) includes a flexible mouth piece.

**9.** The beverage cap (2) of any of claims 1 to 8,
**characterized by**
a filter (22) for cleaning the liquid.

**10.** The beverage cap (2) of any of claims 1 to 9,
**characterized in that**
the signal device (12, 20, 36), in particular a loudspeaker (12), a lamp (36), a vibration device and/or a display (20), is arranged to indicate the actual liquid volume (Vᵢₛₜ).

**11.** The beverage cap (2) of any of claims 1 to 10,
**characterized by**
an input device (18) for configuring the time counter (16), in particular for setting time interval (Δt) to a value lying between 1 and 8 hours.

**12.** The beverage cap (2) of any of claims 1 to 11,
**characterized by**
an adaptor (48) for fixing it on a water tap (46).

**13.** A beverage bottle (10), in particular a bicycle bottle, having a beverage cap (2) according to any of claims 1 to 12.

**14.** The beverage bottle (10) of claim 13,
**characterized by**
a volume between 0.5 liters and 7 liters and in particular a volume between 0.75 liters and 2 liters.
